# EUROPEAN PATENT APPLICATION

(11) **EP 4 611 223 A1**
(43) Date of publication of application: **03.09.2025**
(21) Application number: 23882351.2
(22) Date of filing: 29.09.2023
(51) Int. Cl.: H02K 1/32

(54) **ROTOR**

(30) Priority: 27.10.2022 JP 2022172271
(71) Applicant: AISIN CORPORATION, Kariya-shi, Aichi 448-8650 (JP)
(72) Inventor: MATSUMOTO, Akira, Kariya-shi, Aichi 448-8650 (JP); ONO, Hiroyuki, Kariya-shi, Aichi 448-8650 (JP); MORI, Takuma, Kariya-shi, Aichi 448-8650 (JP); NAKAO, Ryosuke, Kariya-shi, Aichi 448-8650 (JP)
(74) Representative: TBK
(86) International application number: PCT/JP2023/035795
(87) International publication number: WO 2024/090142

(57) **Abstract**

This rotor includes an end plate and a supply channel provided separately from the end plate. The supply channel includes a boundary channel extending along a boundary between an outer end face of the end plate and an end plate contact surface of an axial movement restricting portion, a first connection channel provided in a rotor shaft and connecting a hollow portion and the boundary channel, and a second connection channel provided in the end plate and connecting the boundary channel and a core channel.

## Description

### TECHNICAL FIELD

The present invention relates to a rotor.

### BACKGROUND ART

Hitherto, there is known a rotor having a channel through which a coolant flows. Such a rotor is disclosed in, for example, Japanese Unexamined Patent Application Publication No. 2020-120425 (JP 2020-120425 A).

JP 2020-120425 A discloses a rotor including a rotor shaft having a hollow portion through which a coolant is supplied, a rotor core having cooling channels that extend in an axial direction and through which the coolant flows, and two end plates in contact with each other and provided at one axial end of the rotor core. The rotor core has magnet holes in which permanent magnets are disposed on a radially outer side of the cooling channels. Channels for guiding the coolant in the hollow portion of the rotor shaft to the cooling channels of the rotor core are provided at the boundary between the two end plates. The rotor includes a movement restricting portion that is in contact with the end plate on an axially outer side and restricts axial movement of the two end plates and the rotor core.

### Related Art Documents

### Patent Documents

Patent Document 1: Japanese Unexamined Patent Application Publication No. 2020-120425 (JP 2020-120425 A)

### SUMMARY OF THE INVENTION

### Problem to be Solved by the Invention

**In the** rotor described in JP 2020-120425 A, two (or more) end plates whose axial movement is restricted by the movement restricting portion are required to guide the coolant in the hollow portion of the rotor shaft into the cooling channels of the rotor core. It is desirable to simplify the device structure for causing the coolant to flow into the cooling channels of the rotor core extending in the axial direction.

The present invention has been made to solve the above problem, and one object of the present invention is to provide a rotor that can have a simplified device structure for causing a coolant to flow into a core channel of a rotor core extending in an axial direction without providing a plurality of (two) end plates on either side in the axial direction.

### Means for Solving the Problem

In order to achieve the above object, a rotor according to one aspect of the present invention includes: a rotor shaft extending in an axial direction and including a hollow portion through which a coolant is supplied; a rotor core including a shaft insertion hole into which the rotor shaft is inserted, and a core channel that extends in the axial direction and through which the coolant flows; an end plate including an inner end face in contact with one end face of the rotor core in the axial direction, and an outer end face opposite to the inner end face in the axial direction; an axial movement restricting portion that is provided separately from the end plate, includes an end plate contact surface in contact with the outer end face of the end plate, and restricts movement of the end plate and the rotor core in the axial direction relative to the rotor shaft by contact with the outer end face; and a supply channel through which the coolant is supplied from the hollow portion to the core channel. The supply channel includes: a boundary channel extending along a boundary between the outer end face of the end plate and the end plate contact surface of the axial movement restricting portion; a first connection channel provided in the rotor shaft and connecting the hollow portion and the boundary channel; and a second connection channel provided in the end plate and connecting the boundary channel and the core channel.

As described above, the rotor according to the one aspect of the present invention includes the axial movement restricting portion that restricts the movement of the end plate and the rotor core in the axial direction relative to the rotor shaft, and the supply channel through which the coolant is supplied from the hollow portion to the core channel. The supply channel includes the boundary channel extending along the boundary between the outer end face of the end plate and the end plate contact surface of the axial movement restricting portion, the first connection channel provided in the rotor shaft and connecting the hollow portion and the boundary channel, and the second connection channel provided in the end plate and connecting the boundary channel and the core channel. Therefore, the boundary channel of the supply channel for introducing the coolant from the hollow portion of the rotor shaft to the core channel extending in the axial direction of the rotor core can be formed using the one end plate and the axial movement restricting portion that is the existing component. Thus, the number of end plates on either side in the axial direction can be reduced from two to one compared to the conventional technology. Accordingly, the device structure for causing the coolant to flow into the core channel of the rotor core extending in the axial direction can be simplified without providing a plurality of (two) end plates on either side in the axial direction.

In the rotor core according to the one aspect described above, it is preferable that, in a radial direction of the rotor core, a length from an outer circumferential surface of the rotor shaft to an outer circumferential surface of the axial movement restricting portion be smaller than half of a length from the outer circumferential surface of the rotor shaft to an outer circumferential surface of the rotor core. With this structure, the contact area of the axial movement restricting portion on the rotor core can be made relatively small. Thus, the contact pressure of the axial movement restricting portion on the rotor core can be made relatively large. As a result, it is possible to effectively suppress leakage of the coolant from the boundary channel extending along the boundary between the axial movement restricting portion (end plate contact surface) and the end plate (outer end face).

In the rotor core according to the one aspect described above, it is preferable that the end plate include a groove portion recessed from the outer end face toward the rotor core, and the boundary channel be formed by the groove portion and the end plate contact surface of the axial movement restricting portion. With this structure, there is no need to provide a structure for forming the boundary channel on the end plate contact surface side of the axial movement restricting portion. Thus, unlike the case where the groove portions are provided in both the axial movement restricting portion and the end plate, the step of aligning the groove portions between the axial movement restricting portion and the end plate including the groove portion can be eliminated.

In the rotor core according to the one aspect described above, it is preferable that the axial movement restricting portion be a fixed member positioned in the axial direction by being fixed to the rotor shaft, and a set of the end plate and the fixed member be provided on both one side and the other side in the axial direction of the rotor core. With this structure, the structures on the one side and the other side in the axial direction of the rotor core can be made common. Thus, the device structure for cooling the rotor can be simplified.

In the rotor core according to the one aspect described above, it is preferable that the rotor core include: a magnet hole in which a permanent magnet is disposed; and a slit provided on a radially inner side of the magnet hole and formed by a through hole extending in the axial direction of the rotor core, and the core channel through which the coolant flows be formed by the slit. The slit formed by the through hole extending in the axial direction of the rotor core expands in the radial direction when the rotor is driven, thereby slightly moving the position of the rotor core at the radially outer portion of the slit of the rotor core outward in the radial direction while maintaining the position of the rotor core at the radially inner portion of the slit. As a result, the slit maintains the contact between the rotor core and the rotor shaft even when a centrifugal force is acting on the rotor core. With the above structure, the slit can be used as the core channel while maintaining the contact between the rotor core and the rotor shaft by the slit.

It is preferable that the rotor core according to the one aspect described above further include a discharge member including a discharge channel through which the coolant supplied from the supply channel on one side in the axial direction of the rotor core is discharged from the other side in the axial direction, and the discharge channel include an inclined surface that is inclined toward a coil end portion of a stator so that the discharged coolant is discharged toward the coil end portion. With this structure, the coolant can be discharged toward the coil end portion of the stator by the inclined surface. Thus, not only the rotor but also the coil end portion of the stator can be cooled.

The rotor according to the one aspect described above may also have the following structures.

### (Appendix 1)

In the above structure in which the rotor core includes the slit, it is preferable that the slit include an inner slit and an outer slit that is provided on a radially outer side of the inner slit and disposed closer to the magnet hole than the inner slit, and the core channel through which the coolant flows be formed by the outer slit. With this structure, the coolant can flow into the outer slit positioned on the radially outer side of the inner slit and positioned near the magnet hole. Thus, the permanent magnet that generates heat can be cooled effectively.

### (Appendix 2)

In the above structure in which the set of the end plate and the fixed member is provided on both the one side and the other side in the axial direction of the rotor core, it is preferable that the supply channel provided in the set of the end plate and the fixed member on the one side in the axial direction of the rotor core be structured such that the coolant is supplied to the rotor core from the one side in the axial direction of the rotor core and flows to the other side in the axial direction of the rotor core, and the supply channel provided in the set of the end plate and the fixed member on the other side in the axial direction of the rotor core be structured such that the coolant is supplied to the rotor core from the other side in the axial direction of the rotor core and flows to the one side in the axial direction of the rotor core. With this structure, the coolant can flow in both axial directions. Thus, the rotor core can be cooled evenly with good balance.

### (Appendix 3)

In the above structure in which the end plate includes the groove portion, it is preferable that the groove portion that forms the boundary channel include an annular groove portion extending in an annular shape along the outer circumferential surface of the rotor shaft, and a plurality of radial groove portions extending radially outward in the radial direction from the annular groove portion. With this structure, the annular groove portion can easily disperse the coolant in the circumferential direction, and the radial groove portions can easily cause the coolant dispersed in the circumferential direction to flow outward in the radial direction. As a result, the cooling can be performed uniformly without unevenness in the circumferential and radial directions of the rotor core.

### (Appendix 4)

In this case, it is preferable that the first connection channel be connected to the annular groove portion from the radially inner side, and the second connection channel be connected to the radially outer end of the radial groove portion from the rotor core side. With this structure, the coolant can easily flow from the hollow portion of the rotor shaft to the annular groove portion via the first connection channel, and can easily flow from the radial groove portion to the core channel of the rotor core via the second connection channel.

### BRIEF DESCRIPTION OF THE DRAWINGS

[FIG. 1] FIG. 1 is a sectional view showing a rotary electric machine including a rotor according to an embodiment as viewed in a radial direction.
[FIG. 2] FIG. 2 is a diagram taken along line II-II and viewed along arrows in FIG. 1.
[FIG. 3] FIG. 3 is an enlarged view of a portion A in FIG. 1.
[FIG. 4] FIG. 4 is an exploded perspective view of the rotor according to the embodiment.

### MODES FOR CARRYING OUT THE INVENTION

Hereinafter, an embodiment of the present invention will be described with reference to the drawings.

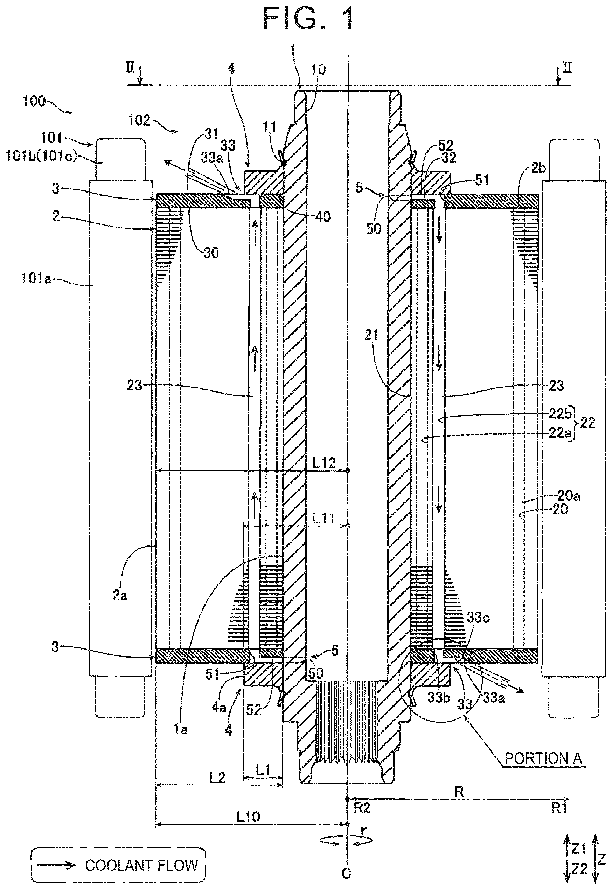

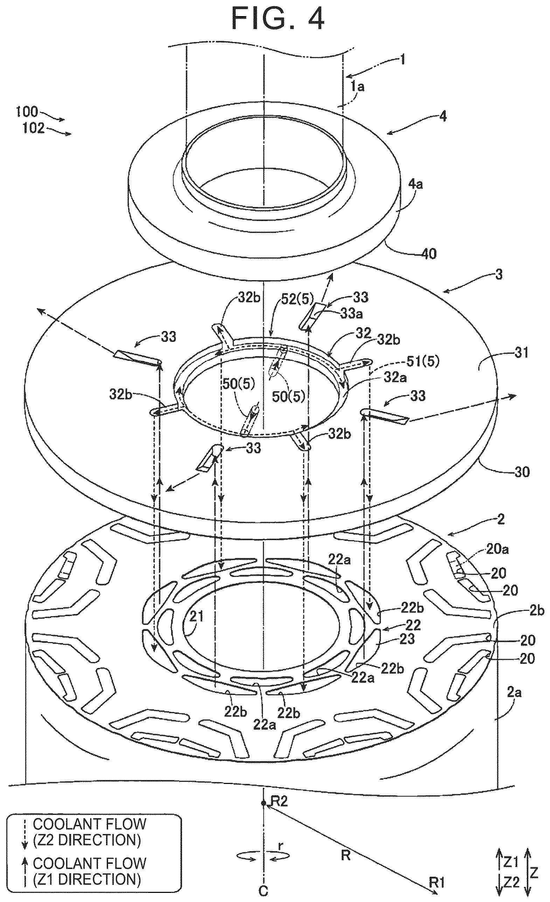

A rotor 102 of the present embodiment provided in a rotary electric machine 100 will be described with reference to FIGS. 1 to 4.

In each drawing, a direction in which a rotor shaft 1 extends (axial direction) is represented by a Z direction. The "axial direction" is also a direction along a rotational central axis C of a rotor core 2.

In each drawing, a radial direction of the rotor core 2 is represented by an R direction. A radially outer side is represented by an R1 direction, and a radially inner side is represented by an R2 direction. The R direction is also radial directions of an end plate (an example of a "discharge member" in the claims) 3, a fixed member (an example of an "axial movement restricting portion" in the claims) 4, and the rotor shaft 1.

In each drawing, a circumferential direction of the rotor core 2 is represented by an r direction. The r direction is also circumferential directions of the end plate 3, the fixed member 4, and the rotor shaft 1.

As shown in FIG. 1, the rotary electric machine 100 includes a stator 101 and the rotor 102. The stator 101 and the rotor 102 face each other. The rotor 102 is disposed on the radially inner side (R2 direction side) of the stator 101. That is, the rotary electric machine 100 of the present embodiment is structured as an inner rotor type rotary electric machine.

### (Structure of Stator)

The stator 101 includes a stator core 101a and a coil 101b disposed on the stator core 101a.

Coil end portions 101c of the coil 101b that protrude in the axial direction from the stator core 101a are provided at both axial ends of the stator core 101a. The stator core 101a is structured by stacking a plurality of electromagnetic steel sheets in the axial direction so that a magnetic flux can pass therethrough. The coil 101b is connected to an external power supply unit, and is structured to be supplied with electric power (e.g., three-phase alternating current power). The coil 101b is configured to generate a magnetic field when supplied with electric power.

### (Structure of Rotor)

The rotor 102 includes the rotor shaft 1, the rotor core 2, the end plates 3, the fixed members 4, and supply channels 5.

The end plate 3 is a single component provided on one side (either side) in the axial direction of the rotor core 2. The end plate 3 is a single component provided also on the other side (either side) in the axial direction of the rotor core 2.

The end plate 3 and the fixed member 4 are disposed in contact with each other in the axial direction. Sets of the end plates 3 and the fixed members 4 are provided on both the one side and the other side in the axial direction of the rotor core 2. The set of the end plate 3 and the fixed member 4 is provided as a pair. The supply channels 5 are structured by the sets of the end plates 3 and the fixed members 4 so that the rotor 102 supplies a coolant to the rotor core 2 from the supply channels 5 on both axial sides and the coolant flows in both axial directions.

Specifically, the rotor 102 is structured such that the fixed member 4, the end plate 3, the rotor core 2, the end plate 3, and the fixed member 4 are disposed in this order in the axial direction. The rotor shaft 1 is inserted through the fixed members 4, the end plates 3, and the rotor core 2.

The set of the end plate 3 and the fixed member 4 on the Z1 direction side and the set of the end plate 3 and the fixed member 4 on the Z2 direction side are disposed with a shift of a predetermined angle in the circumferential direction. Specifically, when viewed in the axial direction, the set of the end plate 3 and the fixed member 4 on the Z1 direction side and the set of the end plate 3 and the fixed member 4 on the Z2 direction side are disposed with the shift of the predetermined angle so that their second connection channels 51 described later do not overlap each other.

For example, the set of the end plate 3 and the fixed member 4 on the Z1 direction side and the set of the end plate 3 and the fixed member 4 on the Z2 direction side are disposed with a shift of 45° in the circumferential direction.

The rotor core 2 is structured by stacking a plurality of electromagnetic steel sheets in the axial direction so that a magnetic flux can pass therethrough. The rotor core 2 includes a plurality of magnet holes 20 in which permanent magnets 20a are disposed. The magnet holes 20 are disposed at predetermined angular intervals near an outer circumferential surface 2a on the radially outer side (R1 direction side) of the rotor core 2. The magnet hole 20 extends through the rotor core 2 in the axial direction.

The rotary electric machine 100 is structured as an interior permanent magnet motor (IPM motor). The plurality of permanent magnets 20a forms a plurality of magnetic poles M provided circumferentially. The rotor 102 is structured such that, when the rotary electric machine 100 is driven, the permanent magnets 20a that generate heat are cooled by the coolant flowing through the rotor 102.

### (Structure of Rotor Shaft of Rotor)

The rotor shaft 1 is a shaft portion that serves as the center of rotation of the rotary electric machine 100. The rotor shaft 1 has a cylindrical (annular) shape with a circular outer circumferential surface 1a. For example, the rotor shaft 1 is made of steel.

The rotor shaft 1 has a hollow portion 10 and first connection channels 50 that form part of the supply channels 5.

The hollow portion 10 is formed by a hole portion extending along the rotational central axis C that extends in the axial direction (Z direction) of the rotor shaft 1. The hollow portion 10 is a portion to which the coolant is first supplied among the components of the rotor 102. The coolant is supplied to the hollow portion 10 from a coolant supply source (not shown) that stores the coolant.

The first connection channel 50 is formed by a through hole for causing the coolant to flow from the hollow portion 10 to the outside of the rotor shaft 1. The first connection channel 50 extends linearly in the radial direction (R direction). A plurality of first connection channels 50 is provided in the circumferential direction (r direction). For example, two first connection channels 50 are provided at equal angular intervals in the circumferential direction (r direction). Two first connection channels 50 are provided on each of the one side and the other side of the rotor shaft 1 in the axial direction (four in total). The radially inner end of the first connection channel 50 is connected to the hollow portion 10. The radially outer end of the first connection channel 50 is connected to a boundary channel 52 (annular groove portion 32a) that forms part of the supply channel 5.

### (Structure of Rotor Core of Rotor)

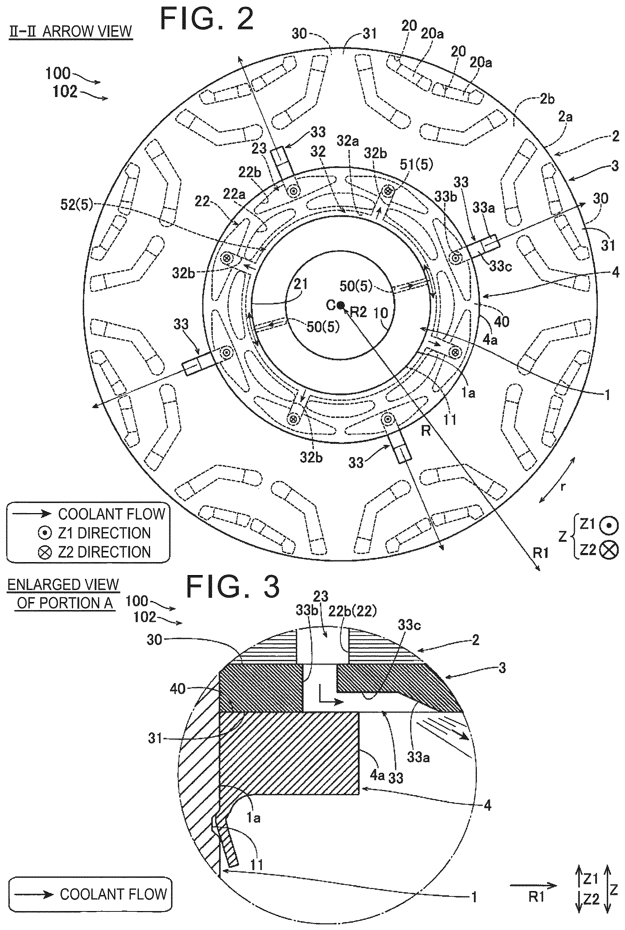

As shown in FIGS. 1 and 2, the rotor core 2 includes the above magnet holes 20, a shaft insertion hole 21 into which the rotor shaft 1 is inserted, slits 22, and core channels 23 that extend in the axial direction and through which the coolant flows.

The shaft insertion hole 21 is formed by a circular hole portion disposed at the center of the rotor core 2. Therefore, the rotor core 2 has a cylindrical (annular) shape with the circular outer circumferential surface 2a.

The slit 22 is provided on the radially inner side of the magnet hole 20. The slit 22 is formed by a through hole extending in the axial direction of the rotor core 2. The slits 22 are disposed near an inner circumferential surface on the radially inner side (R2 direction side) of the rotor core 2. The core channel 23 through which the coolant flows is formed by the slit 22.

Specifically, the slits 22 include inner slits 22a and outer slits 22b. The outer slits 22b are provided on the radially outer side of the inner slits 22a, and are disposed closer to the magnet holes 20 than the inner slits 22a. That is, the outer slits 22b are disposed closer in the radial direction to the permanent magnets 20a that generate heat than the inner slits 22a.

The core channel 23 through which the coolant flows is formed by the outer slit 22b. That is, the outer slit 22b (core channel 23) is connected to the hollow portion 10 of the rotor shaft 1 via the supply channel 5 on one axial side. The outer slit 22b (core channel 23) is configured to discharge the coolant to the outside of the rotor 102 via a discharge channel 33 on the other axial side.

Both axial ends of the inner slit 22a are closed by the end plates 3 (inner end faces 30). Therefore, the coolant does not flow into the inner slit 22a.

### (Structure of End Plate of Rotor)

As described above, a pair of end plates 3 is provided so as to sandwich the rotor core 2 from both axial sides. The end plate 3 is a thin circular plate member that is smaller in axial size than the rotor core 2. A radius L10 of the end plate 3 is larger than a radius L11 of the fixed member 4 (see FIG. 1). The radius L10 of the end plate 3 is substantially equal to a diameter L12 of the rotor core 2 (see FIG. 1).

As shown in FIGS. 1 to 4, the end plate 3 includes the inner end face 30, an outer end face 31, a groove portion 32, and the discharge channels 33.

The inner end face 30 is in contact with one axial end face 2b of the rotor core 2. The end of the core channel 23 of the rotor core 2 is disposed on the inner end face 30. The outer end face 31 is disposed opposite to the inner end face 30 in the axial direction. That is, the outer end face 31 is disposed at a position farther away from the rotor core 2 than the inner end face 30.

The groove portion 32 is recessed from the outer end face 31 toward the rotor core 2. The groove portion 32 is a component for forming the boundary channel 52. Details will be described later.

The discharge channel 33 is configured to discharge, from the other side in the axial direction of the rotor core 2, the coolant supplied from the supply channel 5 on the one side in the axial direction.

The discharge channel 33 includes an inclined surface 33a. The inclined surface 33a is inclined toward the coil end portion 101c of the stator 101 so that the coolant discharged from the discharge channel 33 is discharged toward the coil end portion 101c. A plurality of discharge channels 33 is provided in the end plate 3. Specifically, four discharge channels 33 are provided at equal angular intervals in the circumferential direction (r direction). The discharge channel 33 is disposed between radial groove portions 32b of the adjacent supply channels 5 in the circumferential direction (r direction). Each discharge channel 33 extends radially in the radial direction.

The discharge channel 33 is disposed at a position where the radially inner end overlaps the core channel 23 of the rotor core 2, and is connected to the core channel 23 (outer slit 22b). The radially outer end of the discharge channel 33 is connected to the outside of the rotor 102. Specifically, the discharge channel 33 includes a discharge through hole portion 33b and a discharge groove portion 33c.

The discharge through hole portion 33b is disposed on the radially inner side of the discharge channel 33, and extends in the axial direction. The discharge through hole portion 33b is connected to the core channel 23 (outer slit 22b).

The discharge groove portion 33c extends linearly outward in the radial direction from the discharge through hole portion 33b along the boundary between the end plate 3 and the fixed member 4. The discharge groove portion 33c is provided in the end plate 3. The radially inner portion of the discharge groove portion 33c is closed by the fixed member 4 (end plate contact surface 40) (see FIG. 3). The radially outer portion of the discharge groove portion 33c is not blocked by the fixed member 4, and is open so that the coolant can be discharged toward the rotor 102 (see FIG. 3).

Therefore, the inclined surface 33a is not blocked by the fixed member 4, and is disposed at a position where the inclined surface 33a is exposed to the outside of the rotor 102.

To summarize the flow of the coolant supplied to the discharge channel 33, the coolant flows from the upstream side to the downstream side through the discharge through hole portion 33b, the discharge groove portion 33c, the inclined surface 33a, and the outside of the rotor 102 in this order.

### (Structure of Fixed Member of Rotor)

The fixed member 4 is provided separately from the end plate 3. The fixed member 4 includes the end plate contact surface 40 that is in contact with the outer end face 31 of the end plate 3. The fixed member 4 is configured to restrict axial movement of the end plate 3 and the rotor core 2 relative to the rotor shaft 1 by contact with the outer end face 31 at the end plate contact surface 40.

Specifically, the fixed member 4 is positioned in the axial direction by being directly fixed to the rotor shaft 1. The fixed member 4 is fixed to the rotor shaft 1 by crimping. The rotor shaft 1 has an annular crimping groove 11 (see FIG. 3) extending in the circumferential direction. As described above, a pair of fixed members 4 is provided so as to sandwich the rotor core 2 from both axial sides.

The pair of fixed members 4 is fixed to the rotor shaft 1 by crimping with the end plates 3 and the rotor core 2 interposed therebetween, thereby restricting axial movement of the end plates 3 and the rotor core 2. The fixed member may be fixed to the rotor shaft by press fitting or by fastening with the inner circumferential surface of the fixed member and the outer circumferential surface of the shaft having screw shapes instead of by crimping.

In the radial direction of the rotor core 2, a length L1 (see FIG. 1) from the outer circumferential surface 1a of the rotor shaft 1 to an outer circumferential surface 4a of the fixed member 4 is smaller than half of a length L2 (see FIG. 1) from the outer circumferential surface 1a of the rotor shaft 1 to the outer circumferential surface 2a of the rotor core 2. In the radial direction of the rotor core 2, the outer circumferential surface 4a of the fixed member 4 is disposed on the radially outer side of the outer end of the radial groove portion 32b of the supply channel 5 and near the outer end of the radial groove portion 32b.

The difference between the fixed member 4 and the end plate 3 is that the fixed member 4 is directly fixed to the rotor shaft 1 and the end plate 3 is not directly fixed to the rotor shaft 1. That is, the fixed member 4 itself has a function of determining the axial position of the fixed member 4 relative to the rotor shaft 1, and the end plate 3 itself does not have a function of determining the axial position of the end plate 3 relative to the rotor shaft 1.

### (Structure of Supply Channel of Rotor)

The supply channel 5 is configured to supply the coolant from the hollow portion 10 of the rotor shaft 1 to the core channel 23 (outer slit 22b) of the rotor core 2.

The supply channel 5 includes the first connection channel 50, the second connection channel 51, and the boundary channel 52.

As described above, the first connection channel 50 is provided in the rotor shaft 1, and connects the hollow portion 10 and the boundary channel 52. A plurality of first connection channels 50 is provided for one supply channel 5. For example, two first connection channels 50 are provided for the supply channel 5 on one end plate 3 side at an angular interval of 180° in the circumferential direction. The first connection channel 50 is disposed at a position shifted from the radial groove portion 32b in the circumferential direction. That is, the supply channel 5 is structured such that the coolant is not directly supplied from the first connection channel 50 to the radial groove portion 32b.

The second connection channel 51 is provided in the end plate 3, and connects the boundary channel 52 and the core channel 23. The second connection channel 51 is formed by a through hole extending in the axial direction of the end plate 3.

The boundary channel 52 is a channel that connects the first connection channel 50 and the second connection channel 51. The boundary channel 52 extends along the boundary between the outer end face 31 of the end plate 3 and the end plate contact surface 40 of the fixed member 4.

Specifically, the boundary channel 52 is formed by the groove portion 32 of the end plate 3 recessed toward the rotor core 2 and the end plate contact surface 40 of the fixed member 4. That is, the boundary channel 52 is formed by the end plate 3 and the fixed member 4 in contact with each other so that the end plate contact surface 40 of the fixed member 4 covers the open portion of the groove portion 32 of the end plate 3.

The groove portion 32 that forms the boundary channel 52 includes the annular groove portion 32a and the plurality of radial groove portions 32b.

The annular groove portion 32a extends in an annular shape along the outer circumferential surface 1a of the rotor shaft 1. The plurality of radial groove portions 32b extends radially outward in the radial direction from the annular groove portion 32a. For example, the plurality of radial groove portions 32b is four radial groove portions 32b provided at equal angular intervals in the circumferential direction (r direction). In the radial direction of the rotor core 2, the radially outer end of the radial groove portion 32b of the boundary channel 52 is disposed on the inner side of the radially outer end of the discharge channel 33.

The first connection channel 50 is connected to the annular groove portion 32a from the radially inner side. The second connection channel 51 is connected to the radially outer end of the radial groove portion 32b from the rotor core 2 side.

The supply channel 5 provided in the set of the end plate 3 and the fixed member 4 on the one side in the axial direction of the rotor core 2 is structured such that the coolant is supplied to the rotor core 2 from the one side in the axial direction of the rotor core 2 and flows to the other side in the axial direction of the rotor core 2.

To summarize the flow of the coolant supplied to the rotor core 2 from the one side in the axial direction of the rotor core 2, the coolant flows from the upstream side to the downstream side through the hollow portion 10 of the rotor shaft 1, the first connection channel 50 of the rotor shaft 1, the boundary channel 52, the second connection channel 51 of the end plate 3, the core channel 23 (outer slit 22b) of the rotor core 2, the discharge channel 33 on the other side in the axial direction of the rotor core 2, the outside of the rotor 102, and the coil end portion 101c of the stator 101 in this order.

The supply channel 5 provided in the set of the end plate 3 and the fixed member 4 on the other side in the axial direction of the rotor core 2 is structured such that the coolant is supplied to the rotor core 2 from the other side in the axial direction of the rotor core 2 and flows to the one side in the axial direction of the rotor core 2.

To summarize the flow of the coolant supplied to the rotor core 2 from the other side in the axial direction of the rotor core 2, the coolant flows from the upstream side to the downstream side through the hollow portion 10 of the rotor shaft 1, the first connection channel 50 of the rotor shaft 1, the boundary channel 52, the second connection channel 51 of the end plate 3, the core channel 23 (outer slit 22b) of the rotor core 2, the discharge channel 33 on the one side in the axial direction of the rotor core 2, the outside of the rotor 102, and the coil end portion 101c of the stator 101 in this order.

### (Effects of Embodiment)

The present embodiment has the following effects.

As described above, the present embodiment provides the fixed member 4 that restricts the axial movement of the end plate 3 and the rotor core 2 relative to the rotor shaft 1, and the supply channel 5 through which the coolant is supplied from the hollow portion 10 to the core channel 23. The supply channel 5 includes the boundary channel 52 extending along the boundary between the outer end face 31 of the end plate 3 and the end plate contact surface 40 of the fixed member 4, the first connection channel 50 provided in the rotor shaft 1 and connecting the hollow portion 10 and the boundary channel 52, and the second connection channel 51 provided in the end plate 3 and connecting the boundary channel 52 and the core channel 23. Therefore, the boundary channel 52 of the supply channel 5 for introducing the coolant from the hollow portion 10 of the rotor shaft 1 to the core channel 23 extending in the axial direction of the rotor core 2 can be formed using the one end plate 3 and the fixed member 4 that is the existing component. Thus, the number of end plates 3 on either side in the axial direction can be reduced from two to one compared to the conventional technology. Accordingly, the device structure for causing the coolant to flow into the core channel 23 of the rotor core 2 extending in the axial direction can be simplified without providing a plurality of (two) end plates 3 on either side in the axial direction.

**In the** present embodiment, as described above, in the radial direction of the rotor core 2, the length L1 from the outer circumferential surface 1a of the rotor shaft 1 to the outer circumferential surface 4a of the fixed member 4 is smaller than half of the length L2 from the outer circumferential surface 1a of the rotor shaft 1 to the outer circumferential surface 2a of the rotor core 2. Therefore, the contact area of the fixed member 4 on the rotor core 2 can be made relatively small. Thus, the contact pressure of the fixed member 4 on the rotor core 2 can be made relatively large. As a result, it is possible to effectively suppress leakage of the coolant from the boundary channel 52 extending along the boundary between the fixed member 4 (end plate contact surface 40) and the end plate 3 (outer end face 31).

In the present embodiment, as described above, the end plate 3 includes the groove portion 32 recessed from the outer end face 31 toward the rotor core 2, and the boundary channel 52 is formed by the groove portion 32 and the end plate contact surface 40 of the fixed member 4. Therefore, there is no need to provide a structure for forming the boundary channel 52 on the end plate contact surface 40 side of the fixed member 4. Thus, unlike the case where the groove portions 32 are provided in both the fixed member 4 and the end plate 3, the step of aligning the groove portions 32 between the fixed member 4 and the end plate 3 including the groove portion 32 can be eliminated.

In the present embodiment, as described above, the axial movement restricting portion is the fixed member 4 positioned in the axial direction by being fixed to the rotor shaft 1, and the set of the end plate 3 and the fixed member 4 is provided on both the one side and the other side in the axial direction of the rotor core 2. Therefore, the structures on the one side and the other side in the axial direction of the rotor core 2 can be made common. Thus, the device structure for cooling the rotor 102 can be simplified.

In the present embodiment, as described above, the rotor core 2 includes the magnet hole 20 in which the permanent magnet 20a is disposed, and the slit 22 provided on the radially inner side of the magnet hole 20 and formed by the through hole extending in the axial direction of the rotor core 2. The core channel 23 through which the coolant flows is formed by the slit 22. The slit 22 formed by the through hole extending in the axial direction of the rotor core 2 expands in the radial direction when the rotor 102 rotates, thereby slightly moving the position of the rotor core 2 at the radially outer portion of the slit 22 of the rotor core 2 outward in the radial direction while maintaining the position of the rotor core 2 at the radially inner portion of the slit 22. As a result, the slit 22 maintains the contact between the rotor core 2 and the rotor shaft 1 even when a centrifugal force is acting on the rotor core 2. With the above structure, the slit 22 can be used as the core channel 23 while maintaining the contact between the rotor core 2 and the rotor shaft 1 by the slit 22.

As described above, the present embodiment further provides the discharge member (end plate 3) including the discharge channel 33 through which the coolant supplied from the supply channel 5 on the one side in the axial direction of the rotor core 2 is discharged from the other side in the axial direction. The discharge channel 33 includes the inclined surface 33a that is inclined toward the coil end portion 101c of the stator 101 so that the discharged coolant is discharged toward the coil end portion 101c. Therefore, the coolant can be discharged toward the coil end portion 101c of the stator 101 by the inclined surface 33a. Thus, not only the rotor 102 but also the coil end portion 101c of the stator 101 can be cooled.

The rotor 102 may also have the following structures.

In the present embodiment, as described above, the slits 22 include the inner slit 22a and the outer slit 22b that is provided on the radially outer side of the inner slit 22a and disposed closer to the magnet hole 20 than the inner slit 22a. The core channel 23 through which the coolant flows is formed by the outer slit 22b. Therefore, the coolant can flow into the outer slit 22b positioned on the radially outer side of the inner slit 22a and positioned near the magnet hole 20. Thus, the permanent magnet 20a that generates heat can be cooled effectively.

In the present embodiment, as described above, the supply channel 5 provided in the set of the end plate 3 and the fixed member 4 on the one side in the axial direction of the rotor core 2 is structured such that the coolant is supplied to the rotor core 2 from the one side in the axial direction of the rotor core 2 and flows to the other side in the axial direction of the rotor core 2. The supply channel 5 provided in the set of the end plate 3 and the fixed member 4 on the other side in the axial direction of the rotor core 2 is structured such that the coolant is supplied to the rotor core 2 from the other side in the axial direction of the rotor core 2 and flows to the one side in the axial direction of the rotor core 2. Therefore, the coolant can flow in both axial directions. Thus, the rotor core 2 can be cooled evenly with good balance.

In the present embodiment, as described above, the groove portion 32 that forms the boundary channel 52 includes the annular groove portion 32a extending in the annular shape along the outer circumferential surface 1a of the rotor shaft 1, and the plurality of radial groove portions 32b extending radially outward in the radial direction from the annular groove portion 32a. Therefore, the annular groove portion 32a can easily disperse the coolant in the circumferential direction, and the radial groove portions 32b can easily cause the coolant dispersed in the circumferential direction to flow outward in the radial direction. As a result, the cooling can be performed uniformly without unevenness in the circumferential and radial directions of the rotor core 2.

In the present embodiment, as described above, the first connection channel 50 is connected to the annular groove portion 32a from the radially inner side, and the second connection channel 51 is connected to the radially outer end of the radial groove portion 32b from the rotor core 2 side. Therefore, the coolant can easily flow from the hollow portion 10 of the rotor shaft 1 to the annular groove portion 32a via the first connection channel 50, and can easily flow from the radial groove portion 32b to the core channel 23 of the rotor core 2 via the second connection channel 51.

### [Modifications]

The embodiment disclosed herein should be construed as illustrative in all respects and not restrictive. The scope of the present invention is shown by the claims rather than by the above description of the embodiment, and includes all changes (modifications) that fall within the meaning and scope equivalent to the claims.

For example, the above embodiment illustrates the example in which the rotor core has the slit and the coolant flows into the slit (example in which the slit serves as the core channel), but the present invention is not limited to this. In the present invention, the rotor core need not have the slit, and may instead have a dedicated core channel through which the coolant flows.

The above embodiment illustrates the example in which the end plates and the fixed members are disposed on both sides in the axial direction of the rotor core, but the present invention is not limited to this. In the present invention, the end plate and the fixed member may be disposed only on either side in the axial direction of the rotor core.

The above embodiment illustrates the example in which the axial movement restricting portion of the present invention is the fixed member that is crimped, but the present invention is not limited to this. In the present invention, the axial movement restricting portion may be structured by a flange provided on the rotor shaft. In this case, the flange is in contact with the end plate from the outer side in the axial direction, thereby restricting the axial movement of the end plate. The flange may be integral with the rotor shaft or may be a separate component.

The above embodiment illustrates the example in which the coolant flows in both axial directions of the rotor core, but the present invention is not limited to this. In the present invention, the coolant may flow only in one axial direction of the rotor core.

The above embodiment illustrates the example in which the slits include both the inner slit and the outer slit (two slits arranged in the radial direction), but the present invention is not limited to this. In the present invention, the slit may be a single slit arranged in the radial direction.

The above embodiment illustrates the example in which the groove portion that forms the boundary channel is provided only in the end plate, but the present invention is not limited to this. In the present invention, the groove portion that forms the boundary channel may be provided in both the end plate and the fixed member. Further, the groove portion that forms the boundary channel may be provided only in the fixed member.

The above embodiment illustrates the example in which the groove portion that forms the boundary channel includes the annular groove portion and the radial groove portions, but the present invention is not limited to this. In the present invention, for example, the groove portion that forms the boundary channel may include only the radial groove portions.

The above embodiment illustrates the example in which the fixed member is the member that is fixed to the rotor shaft by crimping, but the present invention is not limited to this. In the present invention, the fixed member may be a member that is fixed to the rotor shaft by press fitting, fastening with a nut, etc.

In the above embodiment, the number of core channels provided in the rotor core and extending in the axial direction may be different from the number in the above embodiment.

### Description of the Reference Numerals

1 rotor shaft
1a outer circumferential surface (of rotor shaft)
2 rotor core
2a outer circumferential surface (of rotor core)
2b one end face (in axial direction of rotor core)
3 end plate (discharge member)
4 fixed member (axial movement restricting portion)
4a outer circumferential surface (of fixed member)
5 supply channel
10 hollow portion (of rotor shaft)
20 magnet hole (of rotor core)
20a permanent magnet
21 shaft insertion hole
22 slit
23 core channel
30 inner end face (of end plate)
31 outer end face (of end plate)
32 groove portion (of end plate)
33 discharge channel
33a inclined surface (of discharge channel)
40 end plate contact surface (of fixed member)
50 first connection channel (of supply channel)
51 second connection channel (of supply channel)
52 boundary channel (of supply channel)
101 stator
101c coil end portion (of stator)
102 rotor
L1 length (from outer circumferential surface of rotor shaft to outer circumferential surface of fixed member)
L2 length (from outer circumferential surface of rotor shaft to outer circumferential surface of rotor core)

## Claims

1. A rotor comprising:
a rotor shaft extending in an axial direction and including a hollow portion through which a coolant is supplied;
a rotor core including a shaft insertion hole into which the rotor shaft is inserted, and a core channel that extends in the axial direction and through which the coolant flows;
an end plate including an inner end face in contact with one end face of the rotor core in the axial direction, and an outer end face opposite to the inner end face in the axial direction;
an axial movement restricting portion that is provided separately from the end plate, includes an end plate contact surface in contact with the outer end face of the end plate, and restricts movement of the end plate and the rotor core in the axial direction relative to the rotor shaft by contact with the outer end face; and
a supply channel through which the coolant is supplied from the hollow portion to the core channel, wherein
the supply channel includes:
a boundary channel extending along a boundary between the outer end face of the end plate and the end plate contact surface of the axial movement restricting portion;
a first connection channel provided in the rotor shaft and connecting the hollow portion and the boundary channel; and
a second connection channel provided in the end plate and connecting the boundary channel and the core channel.

2. The rotor according to claim 1, wherein
in a radial direction of the rotor core, a length from an outer circumferential surface of the rotor shaft to an outer circumferential surface of the axial movement restricting portion is smaller than half of a length from the outer circumferential surface of the rotor shaft to an outer circumferential surface of the rotor core.

3. The rotor according to claim 1, wherein
the end plate includes a groove portion recessed from the outer end face toward the rotor core, and
the boundary channel is formed by the groove portion and the end plate contact surface of the axial movement restricting portion.

4. The rotor according to claim 1, wherein
the axial movement restricting portion is a fixed member positioned in the axial direction by being fixed to the rotor shaft, and
a set of the end plate and the fixed member is provided on both one side and the other side in the axial direction of the rotor core.

5. The rotor according to claim 1, wherein
the rotor core includes:
a magnet hole in which a permanent magnet is disposed; and
a slit provided on a radially inner side of the magnet hole and formed by a through hole extending in the axial direction of the rotor core, and
the core channel through which the coolant flows is formed by the slit.

6. The rotor according to claim 1, further comprising
a discharge member including a discharge channel through which the coolant supplied from the supply channel on one side in the axial direction of the rotor core is discharged from the other side in the axial direction, wherein
the discharge channel includes an inclined surface that is inclined toward a coil end portion of a stator so that the discharged coolant is discharged toward the coil end portion.
